# DEMANDE DE BREVET EUROPEEN

(11) **EP 1 521 410 A1**
(43) Date de publication de la demande: **06.04.2005**
(21) Numéro de dépôt: 04292311.0
(22) Date de dépôt: 27.09.2004
(51) Int. Cl.: H04L 12/56, H04J 14/02

(54) **Méthode d'allocation de ressource dans un réseau de télécommunications multigranulaire**

(30) Priorité: 30.09.2003 FR 0311411
(71) Demandeur: ALCATEL, 75008 Paris (FR)
(72) Inventeur: Dotaro, Emmanuel, 91370 Verrières le Buisson (FR); Vigoureux, Martin, 75015 Paris (FR)
(74) Mandataire: Fournier, Michel

(57) **Abrégé**

La méthode vise à déterminer d'allocation de ressources (WB1) dans un réseau de télécommunications (10) d'architecture multigranulaire et de topologie donnée définissant des liens, le réseau comprenant des premières ressources dites supérieures ayant une granularité supérieure à celle de deuxièmes ressources dites inférieures.

Cette méthode comprend une étape n°1 de détermination des demandes du trafic relatives auxdites ressources inférieures, une étape n°2 relative à des sous-chemins avec un fonction de coût, une étape n°3 comprenant l'élection du meilleur sous-chemin (BE) au regard de la fonction de coût et l'allocation d'au moins une ressource supérieure audit meilleur sous-chemin pour une prise en charge d'au moins une partie des ressources inférieures, une étape n°4 de remise à jour des demandes de trafic relatives aux ressources inférieures et une étape n°5 de réitération des étapes n°2 à n°4 jusqu'à ce qu'une nouvelle allocation d'une ressource supérieure ne permette pas un gain en regard de la fonction de coût.

## Description

La présente invention se rapporte au domaine des télécommunications et plus précisément se rapporte à une méthode d'allocation d'au moins une ressource dans un réseau de télécommunications d'architecture multigranulaire.

De manière connue, un réseau de télécommunications hiérarchisé utilise un ensemble de ressources de granularités distinctes, par exemple les ressources suivantes, classées par ordre croissant de niveaux de granularité:
- les paquets,
- les cellules et trames (ATM, "Frame Relay", Ethernet),
- les circuits associés à des matrices de commutation de circuits de type "TDM",
- les longueurs d'onde associées à des matrices de commutation par longueurs d'onde ("optical crossconnect" en anglais),
- les bandes de longueurs d'onde associées à des matrices de commutation par bandes de longueurs d'onde ("waveband optical crossconnect" en anglais),
- les fibres optiques associées à des commutateurs spatiaux,
- et les câbles à fibres optiques.

Cet ordre de niveaux de granularité correspond en fait à une hiérarchie d'encapsulation pouvant être mise en oeuvre dans les réseaux actuels.

Actuellement, le dimensionnement d'un réseau hiérarchisé, c'est-à-dire le choix de la répartition des ressources de différentes granularités, de leurs nombres et de leurs capacités, est généralement basé sur des méthodes d'optimisation combinatoires (programmation linéaire en nombres entiers, méthode heuristique ou méta heuristique) utilisant en entrée une matrice de trafic par exemple statique, représentative des demandes de trafic à un moment donné et le plus souvent représentative du pic des demandes de trafic.

Ces méthodes analytiques globales s'attachent à la minimisation ou à la maximisation de variables et impose de par leur complexité de nombreuses approximations.

Ces méthodes sont très lourdes à mettre en oeuvre, lentes et surtout très limitées. Ainsi, ces méthodes existantes ne sont pas conçues pour tenir compte des contraintes réelles, de plus en plus fortes, en termes de fluctuations du trafic (distribution du trafic variable dans le temps et dans l'espace) et/ou de gestion des divers protocoles pour une optimisation du routage.

La présente invention vise à pallier à ces problèmes en fournissant une méthode intelligente d'allocation de ressources pour un meilleur dimensionnement du réseau en construction, comme pour une reconfiguration dynamique en réponse à une requête.

Pour cela, l'invention propose une méthode qui implique des éléments de réseaux multigranulaires qu'il convient au préalable de bien comprendre. Pour une topologie de réseau donnée, on peut définir pour chaque niveau de granularité des "liens" qui sont des liaisons entre noeuds voisins du réseau pour le niveau de granularité considéré. La topologie peut être la topologie physique, ou une topologie logique correspondant à un niveau supérieur de granularité. Ainsi, le lien peut être un lien physique point à point, donc entre deux noeuds adjacents physiquement; ou un lien logique entre un premier et un dernier noeud non adjacents physiquement.

Une "route" dans le réseau et pour un niveau de granularité considéré sera un itinéraire depuis un noeud de départ jusqu'à un noeud d'arrivée. Une route sera donc constitué d'un seul lien ou d'une succession de liens consécutifs séparés par des noeuds.

Dans une route, on peut définir des sous-chemins constitués chacun d'une section de cette route délimitée par deux noeuds quelconques de cette route, y compris les noeuds de départ et d'arrivée délimitant la route. Un sous-chemin d'une route donnée sera alors identifié par les deux noeuds placés à ses extrémités : un noeud d'entrée et un noeud de terminaison.

Une demande du trafic est définie entre un noeud source et un noeud destinataire et, si elle est suivie d'effet, correspondra à un volume de trafic entre ces deux noeuds. Un volume de trafic sur un sous-chemin sera alors le volume total de trafic véhiculé de bout en bout par ce sous-chemin, c'est-à-dire depuis son noeud d'entrée jusqu'à son noeud de terminaison.

Plus précisément, l'invention propose une méthode d'allocation d'au moins une ressource dans un réseau de télécommunications d'architecture multigranulaire et de topologie donnée définissant pour chaque niveau de granularité des noeuds et des liens entre noeuds voisins, le réseau comprenant au moins un première ressource dite supérieure ayant une granularité de niveau supérieure à celle de deuxièmes ressources dites inférieures, caractérisée en ce qu'elle comprend les étapes suivantes :
- une étape n°1 de détermination des demandes du trafic entre noeuds sources et noeuds destinataires et relatives auxdites ressources inférieures,
- une étape n°2 comprenant :
   - le routage, c'est-à-dire la répartition des demandes de trafic sur au moins une partie des liens, le routage définissant des routes,
   - le recensement de sous-chemins relatifs auxdites routes, un sous-chemin étant identifié par un noeud d'entrée et un noeud de terminaison situés sur une desdites routes,
   - la détermination en fonction desdites demandes du trafic du volume de trafic sur chacun desdits sous-chemins,
   - l'application d'une fonction de coût sur chacun desdits sous-chemins, la fonction de coût servant à évaluer un gain,
- une étape n°3 comprenant :
   - l'élection parmi lesdits sous-chemins d'un meilleur sous-chemin pour lequel le gain évalué par la fonction de coût est maximal,
   - et l'allocation d'au moins ladite ressource supérieure audit meilleur sous-chemin pour une prise en charge d'au moins une partie des ressources inférieures et du trafic correspondant,
- une étape n°4 de remise à jour des demandes de trafic relatives aux ressources inférieures comprenant :
   - la suppression des demandes de trafic à l'origine de trafics initialement prévus pour passer par ce meilleur sous-chemin au moyen de ladite partie des ressources inférieures, mais pris en charge par ladite ressource supérieure,
   - l'introduction de demande(s) de trafic adjacente(s) audit meilleur sous-chemin dans chaque cas où une demande de trafic pris en charge par ladite ressource supérieure 1/ a pour source un noeud situé en amont dudit noeud d'entrée, ou 2/ a pour destinataire un noeud situé en aval dudit noeud de terminaison, ou 3/ a pour source et destinataire des noeuds situés respectivement en amont dudit noeud d'entrée et en aval dudit noeud de terminaison, les demandes de trafic adjacentes introduites étant respectivement dans le cas 1/ la demande de trafic avec pour nouveau destinataire ledit noeud d'entrée, dans le cas 2/ la demande de trafic avec pour nouvelle source ledit noeud de terminaison, dans le cas 3/ la demande de trafic avec pour nouveau destinataire ledit noeud d'entrée et la demande de trafic avec pour nouvelle source ledit noeud de terminaison,
- une étape n°5 de réitération des étapes n°2 à n°4 jusqu'à ce que toute allocation d'une ressource supérieure ne permette plus aucun gain.

Un premier avantage de cette méthode est d'être facile à mettre en oeuvre car elle est itérative et chaque itération est constituée d'opérations relativement simples. Un autre avantage important est de toujours assurer une convergence vers une configuration qui convient.

La connaissance des demandes de trafic peut être obtenue par un protocole de routage intra-domaines tel que l'IGP ("Interior Gateway Protocol" en anglais) qui est défini par l'IETF, ou par des analyses de trafic statistiques locales et/ou globales.

De même, le déclenchement d'allocation de ressource(s) selon l'invention peut être lié à plusieurs types d'évènements. Une ou plusieurs ressources supérieures peuvent être allouées provisoirement ou en permanence.

La nature logique des liens, considérés selon les niveaux de granularité, a par exemple pour conséquence que lorsqu'une connexion par bande de longueurs d'onde est déjà établie ou prévue entre deux noeuds non adjacents physiquement, le routage prévu dans l'étape n°1, va, pour des longueurs d'onde et dès la première itération de la méthode, considérer cette liaison multi-liens entre ces deux noeuds comme un seul lien.

On peut citer comme exemple les liens logiques dits 'TE-links' (TE pour "Traffic Engineering" en anglais) utilisés pour le routage dans le protocole 'OSPF-TE' ("Open Shortest Path First- Traffic Engineering" en anglais) d'un réseau GMPLS ("Generalized Multi-Protocol Label Switching" en anglais). Ce lien est de type 'FA' "(Forwarding Adjacencies" en anglais) qui provient d'un 'LSP' ("Label Switched Path" en anglais) d'une granularité donnée.

De préférence, l'étape n°1 peut être réalisée à partir de l'utilisation au choix :
- d'une matrice de trafic statique, représentative des demandes de trafic à un moment donné pas forcément lié au pic de trafic,
- et de préférence de plusieurs matrices de trafic statiques représentatives des demandes de trafic à des moments distincts,
- d'une matrice de trafic stochastique, représentative de l'intensité des demande de trafic à un moment donné par exemple à partir d'une loi de poisson,
- de plusieurs matrices de trafic stochastiques représentatives de l'intensité des demandes de trafic à des moments distincts.

De cette façon, la méthode peut prendre en compte la variabilité du trafic par une estimation statistique sur des échantillons de temps appropriés et éventuellement en faisant appel à des méthodes d'approximation ou d'estimation prédictive de l'évolution du trafic, par exemple par l'établissement de gradients.

Le choix du nombre de matrices et/ou de l'échantillonnage est fonction des échelles de variations du trafic dans le temps et dans l'espace.

Dans un premier mode de réalisation préféré, le routage est réalisé à partir d'un algorithme de routage de type Dijkstra et chaque sous-chemin correspond à un plus court chemin.

En effet, dans un calcul de routes utilisant Dijkstra avec une métrique à 1 et correspondant au nombre de sauts, tout sous-chemin entre deux points d'un plus court chemin est lui-même un plus court chemin. Ce type de routage simple ne dépend pas du temps ni du contexte. Tous les sous-chemins du graphe n'étant pas pris en compte, le nombre de données à stocker est réduit.

Dans un deuxième mode de réalisation préféré, le routage intègre de manière prédictive un gain maximal en regard de la fonction de coût.

Ce routage intelligent prend en compte la façon dont est fait le traitement du trafic. Ainsi, en tenant compte des contraintes de routage, le gain maximal attendu sera augmenté.

Selon une caractéristique avantageuse, la fonction de coût peut prendre en compte l'un ou plusieurs des paramètres suivants : les longueurs des sous-chemins, des contraintes physiques et un coût administratif

Les contraintes physiques sont par exemple liées à des caractéristiques géographiques.

Les contraintes physiques sont également liées au nombre de moyens nécessaires à prévoir. Ainsi, l'allocation d'une ressource supérieure telle qu'une bande de longueur d'onde doit tenir compte d'un éventuel ajout de régénérateurs optiques compensant les atténuations optiques et/ou corrigeant les phénomènes optiques non linéaires d'un très long sous-chemin. La nécessité de tels régénérateurs est à mettre en balance avec le nombre de connections inférieures épargnées, par exemple avec les avantages d'une minimisation de la taille et/ou du nombre de routeurs IP.

Le coût administratif est par exemple lié à une location du réseau.

Aussi, la fonction de coût tient compte de ces paramètres en plus du volume de trafic.

Lorsque les ressources inférieures sont des longueurs d'onde et la ressource supérieure une bande de longueur d'onde, la fonction de coût utilise le nombre de longueurs d'onde à rentrer dans la bande passante.

Lorsque les ressources inférieures sont des paquets, émis de façon discontinue, la fonction de coût ne peut utiliser le volume moyen du trafic mais plutôt une valeur à estimer entre le volume moyen et le pic du trafic.

Aussi, lorsque lesdites ressources inférieures sont des paquets, la fonction de coût prendra en compte une estimation de la bande passante équivalente. La bande passante équivalente est par exemple expliquée dans le document intitulé « Equivalent Capacity and Its Application to Bandwidth Allocation in High-Speed Networks", R. Guerin, IEE Journal on Selected Area of Communication, Vol 9, n°7, Septembre 1991.

Selon une caractéristique avantageuse, l'étape n°4 peut comprendre la formation dans la topologie d'un nouveau lien entre le noeud d'entrée et le noeud de terminaison dudit meilleur sous-chemin. Ce nouveau lien est susceptible d'être utilisé comme lien pour le routage lors d'une nouvelle allocation d'une ressource.

Dans un mode de réalisation préféré, l'étape n°4 peut comprendre la gestion d'une mémoire associée aux ressources supérieures allouées, ladite mémoire comprenant l'une ou plusieurs des informations suivantes : le nombre de sauts pour chaque meilleur sous-chemin, la longueur de chaque meilleur sous-chemin, les noeuds d'entrée et de terminaison de chaque meilleur sous-chemin.

L'étape n°1 peut comprendre la détermination de la distribution des demandes de trafic dans le temps et dans l'espace, par des moyens logiciels ou matériels. Cette détermination peut être réalisée par des moyens distribués dans ledit réseau, et plus précisément par son plan de contrôle. Le plan de contrôle délivre des informations d'un protocole de routage dédié aux ressources inférieures.

A titre d'exemple au niveau des routeurs IP ("Internet Protocol" en anglais), les informations protocolaires sont données par le protocole OSPF-TE qui inonde l'ensemble du réseau de l'état des liens (links state en anglais) notamment avec des attributs de "TE" déclarant entre autres la bande passante utilisée.

La détermination peut aussi être réalisée par des moyens de gestion externes et centralisés ("management 'off line"').

Par ailleurs, la détermination de demandes de trafic peut aussi être obtenue à partir d'informations délivrées par des moyens de mesures, distribués dans le réseau. Ces moyens de mesures sont pilotés automatiquement ou manuellement par un opérateur centralisé.

Si des demandes de trafic sont indépendantes ou présentent une dépendance tolérable en regard de la fonction de coût, les étapes n°2 et n°3 peuvent conduire dans une même itération, à l'élection d'au moins deux meilleurs sous-chemins distincts et à l'allocation d'au moins deux ressources supérieures.

Les ressources inférieures peuvent être choisies parmi les paquets, les circuits, les longueurs d'onde, les bandes de longueur d'onde, les fibres optiques et la ou les ressources supérieures peuvent être choisies parmi les circuits, les longueurs d'onde, les bandes de longueurs d'onde, les fibres optiques et les câbles à fibres optiques.

La ressource supérieure et les ressources inférieures peuvent être adjacentes ou non en termes de niveaux de granularité.

La méthode selon l'invention peut être utilisée pour un dimensionnement ou une reconfiguration dynamique du réseau ou encore pour un dimensionnement de deux réseaux superposés en termes de hiérarchie d'encapsulation.

D'autres caractéristiques et avantages de la présente invention apparaîtront dans la description suivante d'un mode de réalisation préféré de l'invention, donné à titre illustratif et nullement limitatif dans lequel :

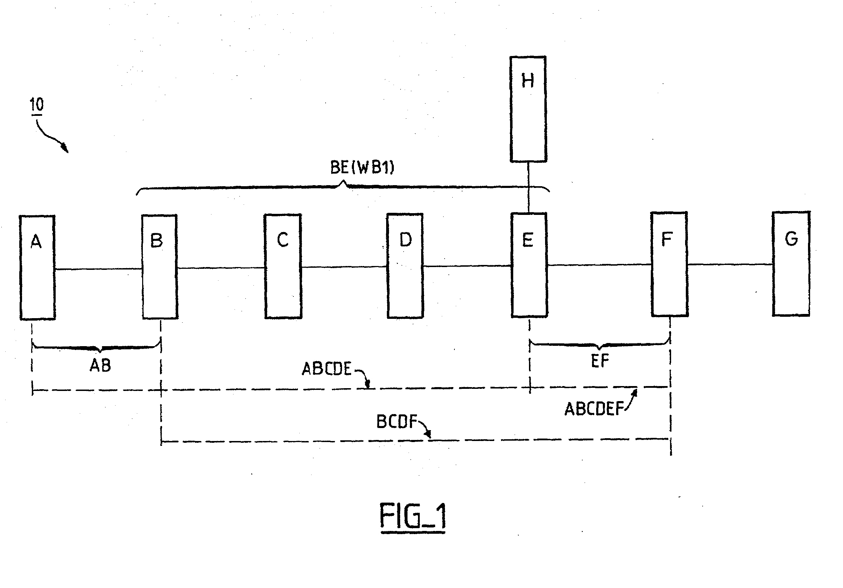

- la figure 1 représente schématiquement un réseau de télécommunications pour la mise en oeuvre de la méthode d'allocation d'au moins une ressource dans un mode de réalisation préféré de l'invention,

La figure 1 représente de manière simplifiée un réseau de télécommunications 10 à dimensionner.

Ce réseau 10 présente une topologie comprenant huit noeuds A à H reliés par des liens physiques point à point par exemple monodirectionnels.

Ce réseau 10 est conçu pour être d'architecture multigranulaire et peut utiliser au moins une première ressource dite supérieure telle qu'au moins une bande de longueurs d'onde WB1 et des deuxièmes ressources dites inférieures par exemple au moins une pluralité de longueurs d'onde.

La bande de longueurs d'onde WB1 est de taille variable et par exemple contient vingt longueurs d'onde utilisables.

Ainsi, ce réseau 10 est à hiérarchiser en régions telles que définies dans la suite de protocole GMPLS de l'IETF, une région correspondant à l'ensemble des ressources qui commutent la même granularité. On utilise la méthode d'allocation de ressource selon l'invention pour dimensionner ce réseau en construction.

Conformément à l'étape n°1 de cette méthode, on détermine d'abord les demandes du trafic entre noeuds sources et noeuds destinataires en termes de nombre de longueurs d'onde à partir d'une matrice de trafic statique.

Cette matrice indique par exemple trois demandes de trafic :
- la première demande correspond à une transmission entre A et F par exemple correspondant à l'utilisation de trois longueurs d'onde nommées 3λ,
- la deuxième demande correspond à une transmission entre B et F par exemple correspondant à l'utilisation cinq longueurs d'onde nommées 5λ,
- et la troisième demande correspond à une transmission entre A et E par exemple correspondant à l'utilisation de sept longueurs d'onde nommées 7λ.
   Conformément à l'étape n°2 de la méthode, on souhaite déterminer les sous-chemins associés aux longueurs d'onde 3λ 5λ et 7λ qui sont susceptibles d'être regroupées dans la bande de longueurs d'onde WB1 à allouer.

Pour ce faire, on réalise un routage en répartissant les trois demandes de trafic sur certains des liens de la topologie, ceci à partir d'un algorithme de routage de type Dijkstra et selon une métrique fonction du nombre de sauts, c'est-à-dire du nombre de liens à emprunter pour passer d'un noeud à un autre selon un itinéraire donné.

Il en résulte par exemple trois routes explicites ABCDEF, BCDEF, ABCDE, chaque sous-chemin étant un plus court chemin. Dans cet exemple, le passage par le noeud H est donc exclu.

Dans une alternative, on peut choisir un algorithme de routage qui calcule les trois premiers plus courts chemins, disjoints ou non. On peut aussi choisir d'affecter un poids sur les liens en fonction d'autres paramètres que le nombre de saut.

On recense ensuite quinze sous-chemins des routes ABCDEF, BCDEF, ABCDE identifiés par leurs noeuds d'entrée et de terminaison : AB, AC, AD, AE, AF, BC, BD, BE, BF, CD, CE, CF, DE, DF, EF.

Ensuite, en fonction des demandes de trafic, on détermine pour chacun des quinze sous-chemins le volume de trafic à supporter du début à la fin du sous-chemin, c'est-à-dire le nombre total de longueurs d'onde utilisées de bout en bout.

On évalue aussi pour chacun des quinze sous-chemins le nombre de sauts.

On applique alors une fonction de coût sur chacun des quinze sous-chemins pour évaluer leurs sensibilités, c'est-à-dire leurs vocations respectives à être associés à la bande de longueur d'onde WB1. Dans cet exemple, la fonction de coût correspond au produit du volume du trafic (nombre total de longueurs d'onde) par le nombre de saut(s) moins un.

Ce produit pourrait être, le cas échéant, pondéré par un facteur représentatif d'un coût administratif et/ou de contraintes physiques, par exemple de régénérateur(s) à ajouter si le sous-chemin est trop long. D'une façon générale, la fonction de coût doit permettre d'évaluer un gain qu'on prévoit de réaliser si on utilise la granularité supérieure. Elle correspond donc à une différence entre le coût des moyens à mettre en oeuvre pour supporter le trafic avec la granularité inférieure et le coût des moyens à mettre en oeuvre pour supporter ce trafic avec la granularité supérieure.

Le tableau 1 ci-dessous présente les résultats de l'étape n°2.

**Tableau 1**

| Sous-chemin | Volume de trafic | Nombre de saut(s) | Fonction de coût |
|---|---|---|---|
| AB | 3λ + 7λ | 1 | - |
| AC | 3λ + 7λ | 2 | 10 |
| AD | 3*λ +* 7*λ* | 3 | 20 |
| AE | 3*λ +* 7*λ* | 4 | 30 |
| AF | 3*λ* | 5 | 12 |
| BC | 3*λ +* 5*λ +* 7*λ* | 1 | - |
| BD | 3λ +5λ *+*7*λ* | 2 | 15 |
| BE | 3λ +5λ +7λ | 3 | 30 |
| BF | 3λ +5λ | 4 | 24 |
| CD | 3λ +5λ +7λ | 1 | - |
| CE | 3λ +5λ +7λ | 2 | 15 |
| CF | 3λ +5λ | 3 | 16 |
| DE | 3λ +5λ +7λ | 1 | - |
| DF | 3λ +5λ | 2 | 8 |
| EF | 3λ +5λ | 1 | - |

Conformément à l'étape n°3, on élit le meilleur sous-chemin à partir de la détermination du sous-chemin ayant un gain maximal d'après la fonction de coût choisie.

Dans cet exemple, un meilleur sous chemin est BE car il transporte le maximum de trafic sur une longueur la plus grande possible. Aussi, la bande de longueurs d'onde WB1 effectivement capable de transporter quinze longueurs d'onde; est allouée pour le transport des données sur BE.

Si cette bande ne contenait par exemple au maximum que 8 longueurs d'onde, on utiliserait alors une deuxième bande de 8 longueurs d'onde.

On peut aussi être amené à décider que la bande WB1 ne prenne en charge qu'une partie des longueurs d'onde, la ou les longueurs d'onde restante(s) étant à commuter individuellement.

Conformément à l'étape n°4, on remet à jour les demandes de trafic relatives aux longueurs d'ondes, par la suppression des demandes de trafic au niveau du meilleur sous-chemin BE et l'introduction de demandes de trafic adjacentes au meilleur sous-chemin BE, c'est-à-dire entre A et B et entre E et F.

La nouvelle matrice indique ainsi deux demandes de trafic résiduelles :
- la première demande correspond à une transmission entre A et B correspondant à l'utilisation de dix longueurs d'onde 3λ + 7λ,
- et la deuxième demande correspond à une transmission entre E et F correspondant à l'utilisation de huit longueurs d'onde 3λ + 5λ.

On stocke l'information de l'allocation de la bande WB1 dans une mémoire et on modifie la topologie du réseau 10 en formant un nouveau lien entre le noeud d'entrée et le noeud de terminaison du meilleur sous-chemin BE. Ce lien logique intégré dans la topologie du réseau est susceptible d'être utilisé lors du routage, si la bande de longueur d'onde WB1 n'est pas remplie et si du trafic peut passer par ce lien. Ainsi, BE introduit un nombre de saut égal à 1.

Conformément à l'étape n°5 la méthode prévoit de réitérer les étapes n°2 à n°4 jusqu'à ce qu'une nouvelle allocation de bande de longueurs d'onde ne permette plus aucun gain.

Dans cet exemple, une nouvelle allocation de la bande de longueurs d'onde ou d'une bande supplémentaire n'est pas profitable car la route AB et la route EF sont des liens point à point. Un multiplexage en longueurs d'onde reste utile

Pour le dimensionnement du réseau 10, on place au minimum une matrice de commutation par bandes de longueurs d'onde dans les noeuds C et D, une matrice de commutation par longueurs d'onde dans les noeuds B et E, et au choix une matrice de commutation par longueurs d'onde ou des ports d'insertion-extraction dans le noeud A .

La méthode d'allocation présentée dans ce premier mode de réalisation se transpose aussi bien pour la reconfiguration dynamique d'un réseau.

Dans ce cas d'une reconfiguration en dynamique, on active les matrices de commutation par bandes de longueurs d'onde dans les noeuds C, D, les matrices de commutation par longueurs d'onde dans les noeuds B et E, et la matrice de commutation par longueurs d'onde ou les ports d'insertion-extraction dans le noeud A.

La bande de longueurs d'onde WB1 peut être allouée temporairement ou de façon permanente au meilleur sous-chemin BE.

Dans une première variante (non représentée), le réseau 10 peut comprendre un autre noeud dit X en amont du noeud A du côté opposé au noeud B. En outre, dans cette première variante, deux nouvelles demandes de trafic entre F et G et X et B peuvent être détectées en dynamique, après la première itération de la méthode, par exemple via des moyens de mesures (non représentés) distribués dans le réseau.

Par exemple, l'information sur la nécessité de ces nouvelles connexions au niveau de longueurs d'ondes est le fruit de mesures de trafic dans des routeurs distribués dans le réseau. En outre cette information est connue via la signalisation dans le plan de contrôle du réseau.

Les demandes de trafic entre X et B et entre A et B d'une part et d'autre part entre E et F et entre E et G sont indépendantes au sens où elles ne peuvent pas faire partie d'un même regroupement. Dans ce cas, les étapes n°2 et n°3 peuvent conduire dans la deuxième itération de la méthode à l'élection de deux meilleurs sous-chemin et à l'allocation de deux bandes de longueurs d'onde.

La méthode selon l'invention peut aussi s'appliquer lorsque les ressources inférieures sont des paquets et les ressources supérieures sont par exemple des circuits ou des longueurs d'onde.

La méthode selon l'invention propose également une détermination de la distribution des demandes de trafic dans le temps et dans l'espace par des moyens logiciels ou matériels, soit par des moyens distribués dans le réseau et à partir d'informations d'un protocole de routage dédié aux ressources inférieures, soit par des moyens de gestion externes et centralisés.

La méthode selon l'invention propose aussi l'utilisation de plusieurs matrices de trafic par exemple statiques de façon à donner une dimension statistique. Par exemple on tient compte des demandes de trafic variables à différentes heures de la journée. Dans ce cas, le choix du meilleur sous-chemin va être décidé par rapport à un optimum au niveau la journée et qui ne représente pas forcément l'optimum pour chacune des heures.

Pour l'élaboration de la fonction de coût, on tient donc compte des besoins aux différentes heures. Par exemple, pour un besoin de trois longueurs d'onde le matin et de dix longueurs d'onde le soir, on choisit dix longueurs d'onde.

L'invention propose aussi un routage intelligent qui intègre de manière prédictive le gain de la fonction de coût. Par exemple, au lieu de choisir une métrique égale à un comme avec un algorithme de Dijkstra, on affecte aux liens une métrique variable et choisie d'autant plus basse que le lien porte du trafic. Ainsi, on agrège au maximum le trafic.

## Revendications

1. Méthode d'allocation d'au moins une ressource (WB1) dans un réseau (10) de télécommunications d'architecture multigranulaire et de topologie donnée définissant pour chaque niveau de granularité des noeuds et des liens entre noeuds voisins, le réseau (10) comprenant au moins un première ressource dite supérieure (WB1) ayant une granularité de niveau supérieure à celle de deuxièmes ressources dites inférieures, **caractérisée en ce qu'**elle comprend les étapes suivantes :
- une étape n°1 de détermination des demandes du trafic entre noeuds sources et noeuds destinataires et relatives auxdites ressources inférieures,
- une étape n°2 comprenant:
- le routage, c'est-à-dire la répartition des demandes de trafic sur au moins une partie des liens, le routage définissant des routes (ABCDEF, BCDEF, ABCDE),
- le recensement de sous-chemins relatifs auxdites routes, un sous-chemin étant identifié par un noeud d'entrée et un noeud de terminaison situés sur une desdites routes,
- la détermination en fonction desdites demandes du trafic du volume de trafic sur chacun desdits sous-chemins,
- l'application d'une fonction de coût sur chacun desdits sous-chemins, la fonction de coût servant à évaluer un gain,
- une étape n°3 comprenant :
- l'élection parmi lesdits sous-chemins d'un meilleur sous-chemin (BE) pour lequel le gain évalué par la fonction de coût est maximal,
- et l'allocation d'au moins ladite ressource supérieure audit meilleur sous-chemin (BE) pour une prise en charge d'au moins une partie des ressources inférieures et du trafic correspondant,
- une étape n°4 de remise à jour des demandes de trafic relatives aux ressources inférieures comprenant :
- la suppression des demandes de trafic à l'origine de trafics initialement prévus pour passer par ce meilleur sous-chemin au moyen de ladite partie des ressources inférieures, mais pris en charge par ladite ressource supérieure,
- l'introduction de demande(s) de trafic adjacente(s) audit meilleur sous-chemin dans chaque cas où une demande de trafic pris en charge par ladite ressource supérieure 1/ a pour source un noeud situé en amont dudit noeud d'entrée et n'implique pas une traversée dudit noeud de terminaison, ou bien 2/ a pour destinataire un noeud situé en aval dudit noeud de terminaison et n'implique pas une traversée dudit noeud d'entrée, ou bien 3/ a pour source et destinataire des noeuds situés respectivement en amont dudit noeud d'entrée et en aval dudit noeud de terminaison, les demandes de trafic adjacentes introduites étant respectivement dans le cas 1/ la demande de trafic avec pour nouveau destinataire ledit noeud d'entrée, dans le cas 2/ la demande de trafic avec pour nouvelle source ledit noeud de terminaison, dans le cas 3/ la demande de trafic avec pour nouveau destinataire ledit noeud d'entrée et la demande de trafic avec pour nouvelle source ledit noeud de terminaison,
- une étape n°5 de réitération des étapes n°2 à n°4 jusqu'à ce que toute allocation d'une ressource supérieure ne permette plus aucun gain.

2. Méthode d'allocation d'au moins une ressource selon la revendication 1 **caractérisée en ce que** l'étape n°1 est réalisée à partir de l'utilisation au choix :
- d'au moins une matrice de trafic statique,
- d'au moins une matrice de trafic stochastique,

3. Méthode d'allocation d'au moins une ressource (WB1) selon l'une des revendications 1 ou 2, **caractérisée en ce que** le routage est réalisé à partir d'un algorithme de routage de type "Dijkstra".

4. Méthode d'allocation d'au moins une ressource (WB1) selon l'une des revendications 1 ou 2, **caractérisée en ce que** le routage intègre de manière prédictive un gain maximal.

5. Méthode d'allocation d'au moins une ressource (WB1) selon l'une des revendications 1 à 4, **caractérisée en ce que** ladite fonction de coût prend en compte un ou plusieurs des paramètres suivants : les longueurs des sous-chemins, des contraintes physiques et un coût administratif.

6. Méthode d'allocation d'au moins une ressource selon l'une des revendications 1 à 5, **caractérisée en ce que**, lorsque lesdites ressources inférieures sont des paquets, ladite fonction de coût prend en compte une estimation de bande passante équivalente.

7. Méthode d'allocation d'au moins une ressource (WB1) selon l'une des revendications 1 à 6, **caractérisée en ce que** l'étape n°4 comprend la formation dans la topologie d'un nouveau lien entre le noeud d'entrée et le noeud de terminaison dudit meilleur sous-chemin (BE).

8. Méthode d'allocation d'au moins une ressource selon l'une des revendications 1 à 7, **caractérisée en ce que** l'étape n°4 comprend la gestion d'une mémoire associée aux ressources supérieures allouées, ladite mémoire comprenant l'une ou plusieurs des informations suivantes : le nombre de sauts pour chaque meilleur sous-chemin, la longueur de chaque meilleur sous-chemin, les noeuds d'entrée et de terminaison de chaque meilleur sous-chemin.

9. Méthode d'allocation d'au moins une ressource selon l'une des revendications 1 à 8, **caractérisée en ce que**, si les étapes n°2 et n°3 conduisent, dans une même itération, à l'élection d'au moins deux meilleurs sous-chemins distincts, on effectue l'allocation d'au moins deux ressources supérieures.
